# FASCICULE DE BREVET EUROPEEN

(11) **EP 1 926 192 B1**
(45) Date de publication et mention de la délivrance du brevet: **27.03.2013**
(21) Numéro de dépôt: 07291323.9
(22) Date de dépôt: 05.11.2007
(51) Int. Cl.: H02G 3/12, H02G 3/14

(54) **Boîtier pour cloison sèche, à pattes axialement fixes et appuis extérieurs coulissant axialement**
Gehäuse für Trennwand in Trockenbauweise, mit axial fixierten Laschen und axial verschiebbaren Außenstützen
Box for dry wall, with axially fixed legs and axially sliding external supports

(30) Priorité: 24.11.2006 FR 0610324
(43) Date de publication de la demande: 28.05.2008
(73) Titulaire: Cooper Capri SAS, 41600 Nouan-le-Fuzelier (FR)
(72) Inventeur: Dameme, Jimmy, 41210 Saint-Viatre (FR)
(74) Mandataire: Bertrand, Didier

(56) Documents cités:
- EP-A2- 0 293 614
- DE-A1- 19 519 009
- GB-A- 2 211 364
- DATABASE WPI Week 198426 Derwent Publications Ltd., London, GB; AN 1984-162814 XP002439256 -& NL 8 204 332 A (ABB COMPONENTEN BV) 1 juin 1984 (1984-06-01)

## Description

La présente invention concerne un boîtier pour appareillage électrique destiné à être placé dans un trou pratiqué dans une cloison sèche, notamment en plâtre.

L'état de la technique fait connaître un boîtier d'appareillage électrique pour cloison sèche, du type comprenant un fond et une jupe cylindrique à rebord, ainsi qu'un dispositif de retenue de boîtier destiné à retenir le boîtier dans un trou de la cloison sèche.

Dans des versions primitives d'un tel boîtier, connues par exemple par les documents US 3 848 764, GB 2 211 364 et FR 2 717 322, le dispositif de retenue peut comprendre deux pattes axialement fixes qui dépassent latéralement de la jupe et qui sont élastiquement escamotables vers l'intérieur du boîtier pour l'introduction du boîtier dans le trou grâce à une rampe inclinée formée sur l'arrière des pattes. Une fois introduit, le boîtier est bloqué entre les pattes et le rebord de la jupe. Ce boîtier n'est bien adapté qu'à une seule épaisseur de cloison.

Dans une version améliorée d'un tel boîtier commercialisée par la Demanderesse, le dispositif de retenue consiste en deux pattes ou griffes qui dépassent de la jupe du boîtier et sont axialement mobiles grâce à des vis qui les traversent. Le vissage des vis permet de venir serrer les pattes à l'arrière de la cloison sèche, au bord du trou où le boîtier est disposé et à l'avant duquel il est retenu par un rebord (entièrement périphérique ou seulement partiellement). Ce boîtier donne généralement parfaitement satisfaction. Cependant, quoique la grande majorité des cloisons sèches soient minces, c'est-à-dire d'épaisseur généralement comprise entre 10 et 13mm, il faut pouvoir aussi s'adapter aux cloisons plus épaisses ; l'écartement maximal entre les pattes et le rebord doit donc être prévu très grand, ce qui implique d'utiliser des vis de montage des pattes très longues : le prix de ces vis est accru, ainsi que le temps de montage et de vissage. Par ailleurs, le risque existe qu'en cas de dévissage total des vis, la patte se détache et se perde de façon irrécupérable (par exemple, entre les deux parois d'une cloison creuse, ou au-dessus d'un faux-plafond, naturellement inaccessible), entraînant l'obligation de changer le boîtier.

Comme d'autre part, ces longues vis ne peuvent être démontées, elles ne peuvent pas être utilisées pour la fixation d'un appareillage électrique dans le boîtier, laquelle fixation impose donc de prévoir généralement deux autres vis dans le boîtier préfabriqué. C'est donc un total de quatre vis, voire de huit vis pour les boîtiers doubles, qu'il faut assembler à l'avance sur les boîtiers préfabriqués ; outre le coût des vis en lui-même, la pose de ces vis en machine d'assemblage grève le prix de fabrication, car il faut un tournevis automatique par vis. Enfin, la présence de ces quatre vis dans le boîtier empiète sur le volume intérieur disponible pour l'appareillage électrique.

Pour remédier à ces inconvénients, la Demanderesse a déjà proposé la boîte faisant l'objet du brevet FR 2 766 025.

Par ailleurs, le document EP 0 293 614 fait connaître un boîtier présentant les caractéristiques énoncées dans le préambule de la revendication 1 annexée. Selon ce document, le contre-appui est fixé par ses propres vis au boîtier, et rien ne permet ensuite de régler l'orientation exacte de la plaque d'appareillage par rapport au boîtier, laquelle doit de plus utiliser encore deux autres vis.

Le document NL 8 204 332 décrit un boîtier comportant un anneau libre en rotation, mais ce boitier n'est pas pourvu d'un contre-appui pouvant prendre plusieurs positions axiales.

Le but de l'invention est de proposer une nouvelle conception de boîtier permettant une fabrication plus facile et surtout une mise en place plus aisée pour les monteurs.

L'invention atteint son but grâce à un boîtier pour appareillage électrique présentant l'ensemble des caractéristiques selon la revendication 1 annexée. Grâce à ces dispositions, le boîtier de l'invention peut-être fabriqué de manière assez simple et être monté dans le trou de la cloison sèche en donnant au contre-appui latéral la position axiale qui convient pour assurer, au terme du montage, un positionnement exact du boîtier dans le trou.. De préférence, on maintient d'abord l'appui et le contre-appui à un écartement supérieur à l'épaisseur de paroi, de sorte que le boîtier peut tourner dans le trou, ce qui permet de placer plus facilement les conduits dans le boîtier. Le passage d'une position axiale à une autre se fait à l'aide des mêmes vis qui servent à la fixation de la plaque d'appareillage dans le boîtier. Du fait que les trous de vissage sont formés dans un anneau tournant bloqué axialement dans la jupe cylindrique du boîtier mais libre en rotation, on peut disposer la plaque d'appareillage dans l'orientation définitive voulue même si le boîtier n'a pas été placé lui-même tout à fait dans la bonne orientation, et cela toujours avec les seules même vis (généralement deux vis) de montage. L'anneau tournant est avantageusement un anneau fendu, retenu par des reliefs complémentaires formés sur la paroi intérieure de la jupe près de son bord supérieur. Avantageusement, les trous de vissage sont formés obliquement, de sorte que le vissage des vis entraîne le serrage de l'anneau fendu contre son logement dans le corps du boîtier et donc son blocage en rotation.

Avantageusement, lesdites plusieurs positions axiales sont limitées par deux butées, dont l'une peut, par exemple, être constituée par les pattes elles-mêmes et l'autre par des reliefs complémentaires prévus sur le boîtier et sur le contre-appui.

Avantageusement, le contre-appui est sous forme d'une collerette coulissant axialement sur le bord de la jupe entre les deux butées.

De manière connue, les pattes d'appui sont formées, de préférence par moulage, d'un seul tenant avec la paroi du boîtier, en formant une languette flexible permettant l'escamotage des pattes.

Avantageusement, les pattes présentent une surface intérieure de poussée sous forme d'une rampe conduisant à une partie formant appui.

On prévoit au minimum deux pattes diamétralement opposées pour l'équilibre de la fixation, ou bien trois ou quatre pattes équiréparties.

D'autres caractéristiques et avantages de l'invention apparaîtront à la lecture de la description suivante, en référence aux dessins annexés sur lesquels :

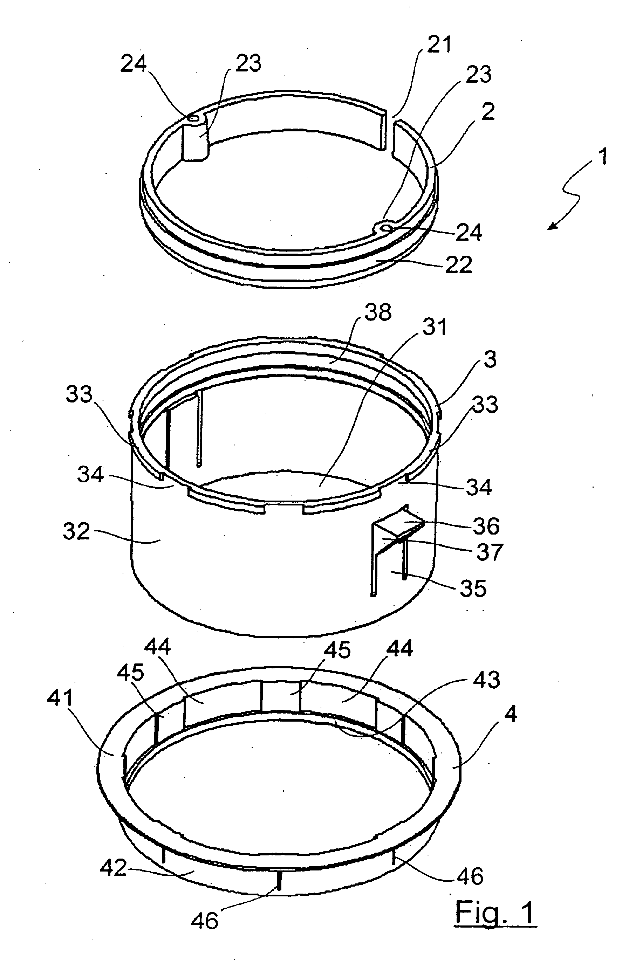

- la figure 1 représente en perspective éclatée un boîtier conforme à l'invention avec ses trois éléments constitutifs non assemblés,
- la figure 2 représente en perspective le boîtier de la figure 1 avec ses trois éléments assemblés,
- la figure 3 représente, en deux demi-coupes par deux demi-plans radiaux respectivement passant et ne passant pas par une patte d'accrochage, le boîtier conforme à l'invention en phase d'approche dans le trou d'une cloison sèche,
- la figure 4 représente en coupe le même boîtier conforme à l'invention en phase intermédiaire d'enfoncement dans le trou de la cloison sèche,
- la figure 5 représente en coupe le même boîtier conforme à l'invention en phase finale d'enfoncement dans le trou de la cloison sèche,
- la figure 6 représente en coupe le même boîtier conforme à l'invention en phase de début de vissage de la plaque d'appareillage,
- la figure 7 représente en coupe le même boîtier conforme à l'invention en phase de fin de vissage de la plaque d'appareillage, avec blocage du boîtier dans le trou.

Le boîtier 1 comporte essentiellement un élément de boîte 3 coopérant avec un anneau tournant 2 et un collerette coulissante 4.

L'élément de boîte 3 comporte un fond circulaire 31 et une jupe cylindrique 32 se terminant à son bord supérieur opposé au fond 31 par une lèvre périphérique radialement extérieure 33 interrompue sur des segments 34. Dans la jupe cylindrique 32 sont formées deux pattes radialement opposées comprenant une languette flexible 35 attachée vers le bas de la boîte 3 et terminée par deux appuis plats radiaux 36 soutenus par des équerres formant rampes 37. La face intérieure de la boîte 3 comprend, près du bord supérieur de la jupe 3, une rainure circulaire 38. De manière connue en soi mais non représentée, il est prévu des entrées de conduit dans la jupe 32 et le fond 31, ces entrées étant de préférence sous forme d'opercules prédécoupés et attachés par des ponts de matière cassables par l'utilisateur au moment de la mise en place de la boîte.

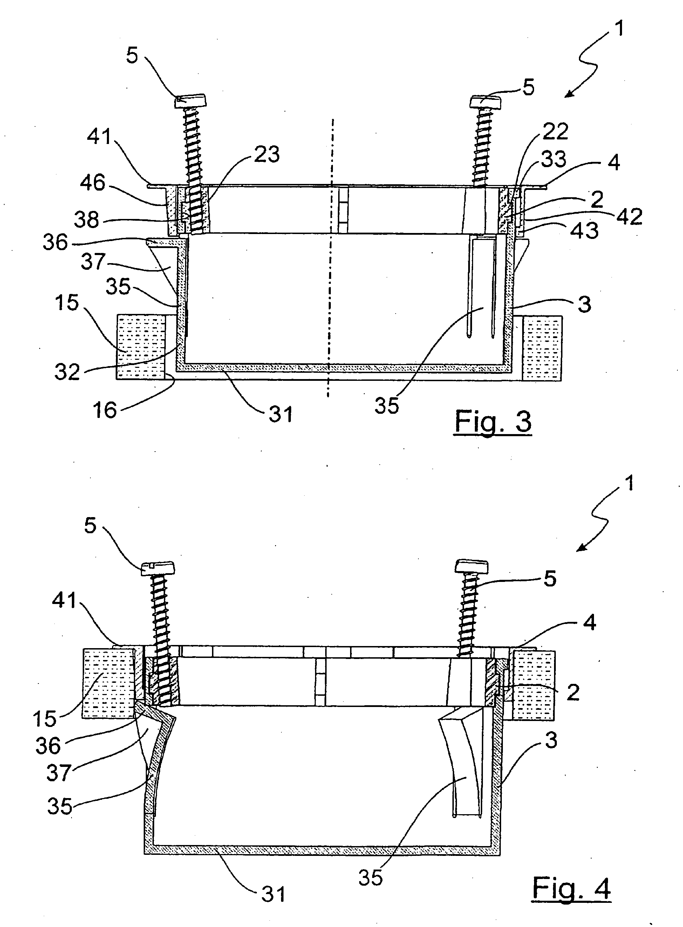

L'anneau tournant 2 est un anneau fendu en 21 et comportant une nervure périphérique extérieure 22 dont les dimensions lui permettent de s'engager avec un léger jeu dans la rainure circulaire intérieure 38 de la boîte 3, de manière à pouvoir y tourner librement (avec plus ou moins de frottement). Deux surépaisseurs radialement opposées 23 forment à l'intérieur de l'anneau 2 des chandelles dans lesquelles sont prévus les trous 24 de vissage de vis 5 de fixation d'appareillage. Les trous 24 sont orientés légèrement obliquement de manière que les vis 5 qui s'y vissent soient elles-mêmes inclinées (cf. figure 3), les têtes des vis 5 étant plus écartées radialement vers l'extérieur du centre de la boîte que le bas de leur tige filetée.

La collerette 4 est essentiellement formée d'un rebord circulaire plat 41 en haut d'une jupe courte 42 bordée à sa partie inférieure par une lèvre continue intérieure 43. La jupe 42 comporte, visibles de l'intérieur, des alternances de parties minces 44 et de parties plus épaisses 45, dont la longueur prise le long de la circonférence correspond sensiblement à celle des segments de lèvre 33 et des interruptions 34 sur la boîte 3. Sur l'extérieur de la jupe 42, des saillies verticales 46 inclinées servent à assurer une meilleure prise de la collerette dans le trou de la cloison en s'opposant à sa rotation par rapport au trou.

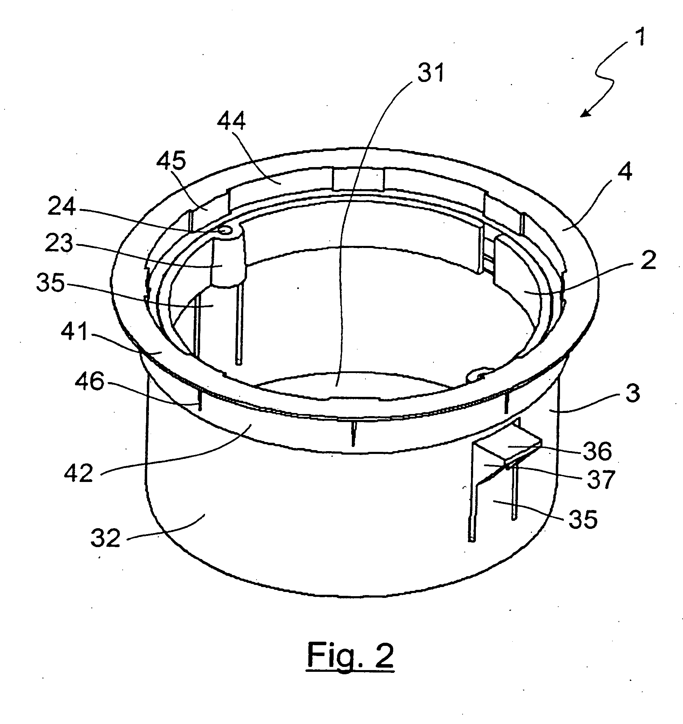

La figure 2 montre les trois éléments 2, 3. et 4 assemblés pour former le boîtier 1 de l'invention. L'anneau tournant 2 est introduit par le haut, grâce à sa fente, à l'intérieure de la boîte 2 où sa nervure 22 vient se loger dans la gorge 38, ce qui bloque l'anneau 2 en coulissement axial mais ne l'empêche pas de pouvoir tourner par rapport à la boîte 2. La collerette 4 est passée par le bas sur l'extérieur de la jupe 32 : les pattes, attaquées sur leur rampes 37 par la collerette 4, s'escamotent vers l'intérieur de la boîte grâce à la souplesse élastique de la languette 35 et laissent donc passer la collerette au-delà des pattes, mais les appuis 36 interdisent le retour de la collerette 4 vers le bas. Les parties épaisses 45 de la collerette s'engagent dans les intervalles nus 34 de la boîte, de sorte que la collerette 4 se trouve bloquée en rotation par rapport à la boîte mais est libre de coulisser verticalement par rapport à elle, grâce à la coopération des parties épaisses 45 et des segments de lèvre 33. Ce coulissement vertical est limité vers le bas par les appuis 36 des pattes comme on l'a vu et vers le haut par la butée formée par les lèvres 43 contre les lèvres 33.

Les figures 3 à 7 permettent de suivre les phases d'insertion et de fixation du boîtier 1 conforme à l'invention dans le trou 16 pratiqué dans une cloison sèche 15.

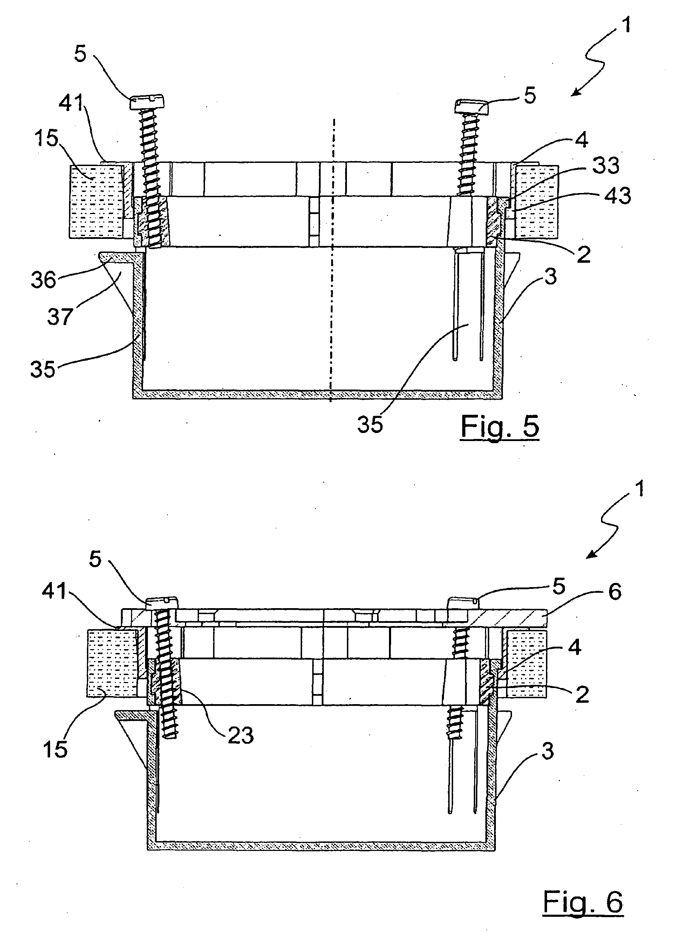

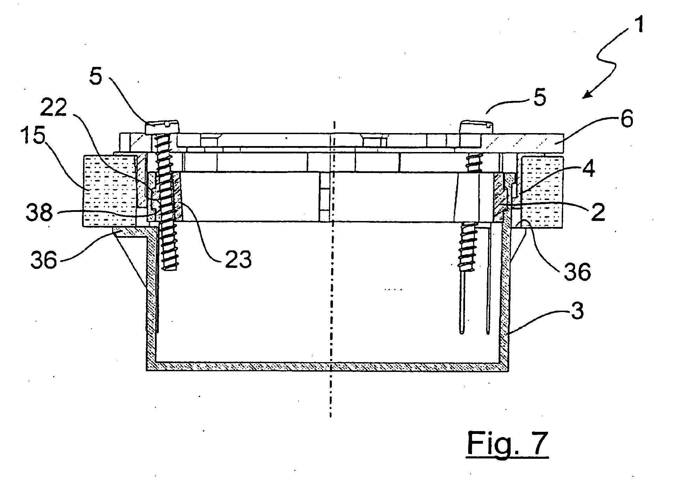

Le boîtier 1, assemblé et muni de ses deux vis 5 vissées partiellement dans les trous 24, est introduit dans le trou 16 (figure 3) par le dessus. En enfonçant le boîtier, les pattes 36 viennent porter par leur rampe 37 sur les parois du trou 16, et elles s'escamotent vers l'intérieur (figure 4) en prenant appui sur les parois du trou 16. Le bord plat 41 de la collerette 4 vient alors en butée contre la face supérieure de la cloison 15, à la périphérie du trou 16. Compte tenu du coulissement axial possible entre la collerette 4 et la boîte 3, on peut continuer d'enfoncer la boîte 3 verticalement, de sorte que (figure 5) les pattes 36 passent au-delà du trou 16 de la cloison sèche 15 et reprennent leur forme normale (cela dépend naturellement de l'épaisseur de la paroi sèche), la boîte 3 terminant sa course verticale par la butée des lèvres 33 contre les lèvres 43. On vient alors mettre en place la plaque d'appareillage 6 en la passant par des lumières appropriées sur les vis en attente 5, la plaque 6 s'appuyant sur le bord plat 41 et on commence le vissage des vis 5 (figure 6) dans les chandelles 23, jusqu'à ce que les têtes des vis 5 viennent porter contre la plaque d'appareillage 6. En continuant alors le vissage des vis 5 (figure 7), du fait que les têtes de vis sont en butée axiale sur la plaque 6, le rapprochement qui se continue entre les têtes de vis et les chandelles de vissage 23 de l'anneau 2 entraîne la remontée axiale dudit anneau 2 et donc, puisqu'ils sont liés axialement, celle de la boîte 3 qui coulisse à cet effet dans la collerette 4, axialement fixe. Le serrage peut ainsi se poursuivre jusqu'à ce que les appuis de pattes 36 viennent en butée contre la face inférieure de la paroi 15, au voisinage du trou 16, ce qui a pour effet de fixer définitivement le boîtier 3 par rapport au trou 16. Dans le même temps, au fur et à mesure du vissage des vis 5, compte tenu de leur obliquité, la remontée axiale forcée de l'anneau 2 a pour effet d'écarter légèrement les chandelles 23 radialement, pour suivre la vis, ce qui donc repousse et appuie la nervure 22 de l'anneau 2 au fond de la gorge de retenue 38 de la boîte 3 et bloque donc en rotation l'anneau 2, fixant ainsi définitivement la position angulaire de la plaque d'appareillage 6 avant même qu'elle soit fixée par son serrage contre le bord 41 de la collerette 4. Ainsi, selon l'invention, on obtient un boîtier sans lequel les vis restent peu nombreuses et assurent à la fois la fixation de la collerette de contre-appui, la fixation de la plaque d'appareillage, et la fixation en rotation de l'anneau tournant, les vis n'étant pas solidaires en rotation de ladite collerette.

## Revendications

1. Boîtier (1) pour appareillage électrique destiné à être placé dans un trou (16) pratiqué dans une cloison sèche (15), comprenant un fond (31) et une jupe (32) perpendiculaire audit fond, ainsi qu'au moins un dispositif de retenue de boîtier destiné à retenir le boîtier (1) dans un trou de la cloison sèche, le dispositif de retenue comprenant au moins deux pattes fixes (36) dépassant latéralement de la jupe (32) qui sont élastiquement escamotables vers l'intérieur du boîtier pour l'introduction du boîtier dans le trou (16), et sur le bord extérieur de la jupe (3), du côté opposé au fond (31), au moins un contre-appui latéral (41) pouvant prendre plusieurs positions axiales, **caractérisé en ce qu'**il est prévu des vis (5) de fixation de plaque d'appareillage (6) qui coopèrent avec des trous de vissage (24) formés dans un anneau tournant (2) bloqué axialement dans la jupe (32) du boîtier mais libre en rotation, les mêmes vis (5) servant au passage du contre-appui d'une position axiale à une autre et à la fixation de la plaque d'appareillage (6) dans une orientation choisie par rapport au boîtier.

2. Boîtier (1) selon la revendication 1, **caractérisé en ce que** ces plusieurs positions axiales sont limitées par deux butées (36, 33).

3. Boîtier (1) selon l'une quelconque des revendications 1 ou 2, **caractérisé en ce que** le contre-appui (41) est sous forme d'une collerette (4) coulissant axialement sur le bord de la jupe entre deux butées (36, 33).

4. Boîtier (1) selon l'une quelconque des revendications 1 à 3, **caractérisé en ce que** l'anneau (2) est un anneau fendu, retenu par des reliefs complémentaires formés (38) sur la paroi intérieure de la jupe (32) près de son bord supérieur.

5. Boîtier (1) selon l'une quelconque des revendications 1 à 4, **caractérisé en ce que** les trous de vissage (23) sont formés obliquement.

6. Boîtier (1) selon l'une quelconque des revendications 1 à 5, **caractérisé en ce que** les pattes d'appui (36) sont formées, de préférence par moulage, d'un seul tenant avec la paroi du boîtier.

7. Boîtier (1) selon l'une quelconque des revendications 1 à 6, **caractérisé en ce que** les pattes (36) présentent une surface intérieure de poussée sous forme d'une rampe (37) conduisant à une partie formant appui.

## Claims

1. Housing (1) for electrical equipment to be placed in a hole (16) made in a dry partition (15), comprising a base (31) and a skirt (32) which is perpendicular to said base, and at least one housing retainer to hold the housing (1) in a hole of the dry partition, the retainer comprising at least two fixed legs (36) protruding laterally from the skirt (32), which are resiliently retractable towards the inside of the housing for the introduction of the housing into the hole (16), and on the outer edge of the skirt (3), on the opposite side from the base (31), at least one lateral counter support (41) which can take multiple axial positions, **characterised in that** screws (5) for fixing an equipment plate (6) are provided which cooperate with screw holes (24) formed in a rotating ring (2) which is locked axially in the skirt (32) of the housing but can rotate freely, the same screws (5) allowing the counter support to move from one axial position to another and fixing the equipment plate (6) in a selected orientation in relation to the housing.

2. Housing (1) according to claim 1, **characterised in that** these multiple axial positions are limited by two stops (36, 33).

3. Housing (1) according to either claim 1 or claim 2, **characterised in that** the counter support (41) is in the form of a flange (4) sliding axially on the edge of the skirt between two stops (36, 33).

4. Housing (1) according to any of claims 1 to 3, **characterised in that** the ring (2) is a split ring, held by complementary reliefs (38) formed on the inner wall of the skirt (32) close to the upper edge thereof.

5. Housing (1) according to any of claims 1 to 4, **characterised in that** the screw holes (23) are formed in an oblique manner.

6. Housing (1) according to any of claims 1 to 5, **characterised in that** the support legs (36) are formed, preferably by moulding, such that they are integral with the wall of the housing.

7. Housing (1) according to any of claims 1 to 6, **characterised in that** the legs (36) comprise an inner thrust surface in the form of a ramp (37) leading to a portion forming a support.

## Patentansprüche

1. Gehäuse (1) für elektrische Ausrüstung, das dazu bestimmt ist, in einem Loch (16) untergebracht zu werden, das in einer Trennwand (15) in Trockenbauweise hergestellt ist, das einen Boden (31) und eine Verkleidung (32) senkrecht zum Boden, sowie mindestens eine Gehäusehalterungsvorrichtung umfasst, die dazu bestimmt ist, das Gehäuse (1) in einem Loch der Trennwand in Trockenbauweise zu halten, wobei die Halterungsvorrichtung mindestens zwei fixierte Laschen (36), die seitlich von der Verkleidung (32) hervorstehen und die zur Einführung des Gehäuses in das Loch (16) elastisch in Richtung des Inneren des Gehäuses einziehbar sind, und auf dem Außenrand der Verkleidung (3) auf der dem Boden (31) entgegengesetzten Seite mindestens eine seitliche Gegenstütze (41) umfasst, die mehrere axiale Stellungen einnehmen kann, **dadurch gekennzeichnet, dass** Schrauben (5) zur Befestigung der Ausrüstungsplatte (6) vorgesehen sind, die mit Schraublöchern (24) zusammenwirken, die in einem Drehring (2) gebildet sind, der in der Verkleidung (32) des Gehäuses axial gesperrt aber frei drehbar ist, wobei dieselben Schrauben (5) für den Übergang der Gegenstütze von einer axialen Stellung in die andere und für die Befestigung der Ausrüstungsplatte (6) in einer gewählten Ausrichtung in Bezug zum Gehäuse dienen.

2. Gehäuse (1) nach Anspruch 1, **dadurch gekennzeichnet, dass** diese mehreren axialen Stellungen durch zwei Anschläge (36, 33) begrenzt sind.

3. Gehäuse (1) nach einem der Ansprüche 1 oder 2, **dadurch gekennzeichnet, dass** die Gegenstütze (41) die Form eines Flansches (4) aufweist, der zwischen zwei Anschlägen (36, 33) auf dem Rand der Verkleidung axial verschiebbar ist.

4. Gehäuse (1) nach einem der Ansprüche 1 bis 3, **dadurch gekennzeichnet, dass** der Ring (2) ein geteilter Ring ist, der durch ergänzende Erhöhungen (38) gehalten wird, die auf der Innenwand der Verkleidung (32) in der Nähe ihres oberen Randes gebildet sind.

5. Gehäuse (1) nach einem der Ansprüche 1 bis 4, **dadurch gekennzeichnet, dass** die Schraublöcher (23) schräg gebildet sind.

6. Gehäuse (1) nach einem der Ansprüche 1 bis 5, **dadurch gekennzeichnet, dass** die Stützlaschen (36) vorzugsweise in einem Stück mit der Wand des Gehäuses gussgeformt sind.

7. Gehäuse (1) nach einem der Ansprüche 1 bis 6, **dadurch gekennzeichnet, dass** die Laschen (36) eine innere Schubfläche in der Form einer Rampe (37) aufweisen, die zu einem Abschnitt führt, der eine Stütze bildet.
